# EUROPÄISCHE PATENTSCHRIFT

(11) **EP 2 805 079 B1**
(45) Veröffentlichungstag und Bekanntmachung des Hinweises auf die Patenterteilung: **16.08.2017**
(21) Anmeldenummer: 12821244.6
(22) Anmeldetag: 12.12.2012
(51) Int. Cl.: F16D 21/06, F16D 23/14

(54) **BETÄTIGUNGSVORRICHTUNG FÜR EINE DOPPELKUPPLUNG**
ACTIVATION DEVICE FOR A DOUBLE CLUTCH
DISPOSITIF D'ACTIONNEMENT POUR UN DOUBLE EMBRAYAGE

(30) Priorität: 18.01.2012 DE 102012200641
(43) Veröffentlichungstag der Anmeldung: 26.11.2014
(73) Patentinhaber: Schaeffler Technologies AG & Co. KG, 91074 Herzogenaurach (DE)
(72) Erfinder: ORTMANN, Simon, 77866 Rheinau-Linx (DE)
(86) Internationale Anmeldenummer: PCT/DE2012/001191
(87) Internationale Veröffentlichungsnummer: WO 2013/107435

(56) Entgegenhaltungen:
- EP-A1- 1 808 612
- WO-A1-2005/028902
- DE-A1-102008 003 601
- DE-A1-102008 047 170
- DE-A1-102010 048 496
- DE-A1-102010 049 927
- DE-T5-112008 001 323

## Beschreibung

Die Erfindung betrifft ein Doppelkupplungsgetriebe mit einer Doppelkupplung und einerBetätigungsvorrichtung mit zwei über je ein Ein-/Ausrücklager betätigbaren Teilkupplungen, wobei zur Beaufschlagung der auf die Teilkupplungen einwirkenden Ein-/Ausrücklager jeweils ein Kolbensystem vorgesehen ist, welches von einer Aktoreinheit in axialer Richtung entlang einer um zumindest eine Getriebeeingangswelle angeordneten, am Doppelkupplungsgetriebe aufgenommenen, Führungshülse verlagerbar ist.

Eine Doppelkupplung umfasst im Wesentlichen zwei separate Kupplungseinrichtungen, die unabhängig voneinander über jeweils eine zugeordnete Ausrückvorrichtung eine Verbindung zu einer Getriebeeingangswelle unterbrechen und herstellen können. Ein bevorzugtes Einsatzgebiet einer solchen Doppelkupplung ist die Verwendung mit einem Doppelkupplungsgetriebe. Die erste Kupplungseinheit bedient hierbei üblicherweise die ungeraden Gangstufen und die zweite Kupplungseinheit die geraden Gangstufen. Auf diese Weise kann, während über die eine Kupplungseinheit aktuell das Drehmoment vom Motor auf das Getriebe übertragen wird, bereits eine andere Gangstufe vorgewählt werden, um anschließend ohne Unterbrechung der Zugkraft von der aktuellen Gangstufe in die vorgewählte Gangstufe schalten zu können. Die Getriebeeingangswelle ist hierfür vorzugsweise aus zwei konzentrischen Wellen zusammengesetzt - aus einer Hohlwelle und einer innen liegenden Vollwelle.

Doppelkupplungsgetriebe bzw. deren Betätigungsvorrichtungen zur Betätigung von Doppelkupplungen sind in einer Vielzahl von Ausführungen aus dem Stand der Technik bekannt. Bei den hydraulisch betätigbaren Kupplungsausrücksystemen sind üblicherweise zwei um die beiden Getriebeeingangswellen des Doppelkupplungsgetriebes angeordnete Nehmerzylindersysteme vorgesehen, welche jeweils zumindest einen druckbeaufschlagbaren Kolben zur Betätigung jeweils einer Kupplungseinrichtung/Teilkupplung enthält. Die mechanisch wirkenden Betätigungssysteme sind durch radial ineinander geschachtelte und um die Getriebeeingangswellen des Doppelkupplungsgetriebes angeordnete Kolbensysteme/Betätigungselemente charakterisiert, welche auf unterschiedlichen Durchmessern auf der die Getriebeeingangswellen umgebenden Führungshülse zentriert angebracht sind. Die Kolbensysteme/Betätigungselemente (auch Betätigungskolben oder Lagerträger) wirken jeweils auf ein Hebelsystem, beispielsweise eine Tellerfeder, einer Kupplungseinrichtung ein, um diese je nach ihrer Bauart als zwangsweise geöffnete oder geschlossene Kupplung durch axiale Verlagerung des dort vorgesehenen Hebelsystems zu schließen oder zu öffnen. Die Betätigungskolben/Lagerträger wiederum werden über Hebel einer Aktoreinheit in axialer Richtung entlang der Führungshülse mechanisch verlagert.

Eine derartige Betätigungsvorrichtung zur Betätigung von Kupplungseinrichtungen wird beispielsweise in der DE 10 2010 048 496 A1 beschrieben. Diese umfasst zwei von jeweils einer Aktoreinheit auf einer Führungshülse axial verlagerbare, ein Hebelsystem einer Kupplung beaufschlagende Lagerträger, die jeweils mit einem Beaufschlagungsbereich für die Aktoreinheit und einem Lagerbereich für ein auf ein Hebelsystem der Kupplungseinrichtung wirkendes Ein-/Ausrücklager ausgestattet sind. Die mit einer Durchführung für die Eingangswellen eines Doppelkupplungsgetriebes versehene Führungshülse ist rohrförmig ausgebildet und mit ihrer den Kupplungseinrichtungen abgewandten Stirnseite an einer Gehäusewand eines Getriebes befestigt. Die beiden radial ineinander geschachtelten Kolbensysteme/Lagerträger sind dabei konzentrisch auf der rohrförmigen Führungshülse angeordnet, wobei sich der der ersten Teilkupplung zugeordnete Lagerträger radial außen und der der zweiten Teilkupplung zugeordnete Lagerträger radial innen auf der Führungshülse befindet. Auch in der DE 10 2010 049 927 A1 wird eine Betätigungsvorrichtung für eine Doppelkupplung offenbart. Die zwei vorgesehenen Kolbensysteme werden durch einen Aktor axial verlagert. Hierbei gleiten die zwei Kolbensysteme jeweils auf einer Führungsfläche einer Führungshülse, wobei beide Führungsflächen radial voneinander beabstandet angeordnet sind.

Eine gattungsgemäße Ausbildung einer Betätigungsvorrichtung für Doppelkupplungen wird auch in der DE 10 2008 047 170 A1 offenbart. Bei diesem Kupplungsbetätigungssystem wird der ein Hebelsystem einer Kupplungseinrichtung beaufschlagende Kolben/Lagerträger mittels eines eine Schwenkbewegung ausübenden Hebelaktors in axialer Richtung ausgelenkt. Der einzelne Kolben/Lagerträger ist mit geringem Spiel auf der Führungshülse in axialer Richtung verlagerbar geführt. Die beiden radial ineinander geschachtelten Kolbensysteme sind ebenfalls konzentrisch auf der rohrförmigen Führungshülse angeordnet.und stützen das Schleppmoment ab. Da sich die beiden Kolben dabei axial und radial übergreifen, soll hier der von dem Betätigungssystem beanspruchte Bauraum nicht wesentlich größer sein als der für ein einzelnes Ausrücksystem dieser Bauweise benötigte Bauraum.

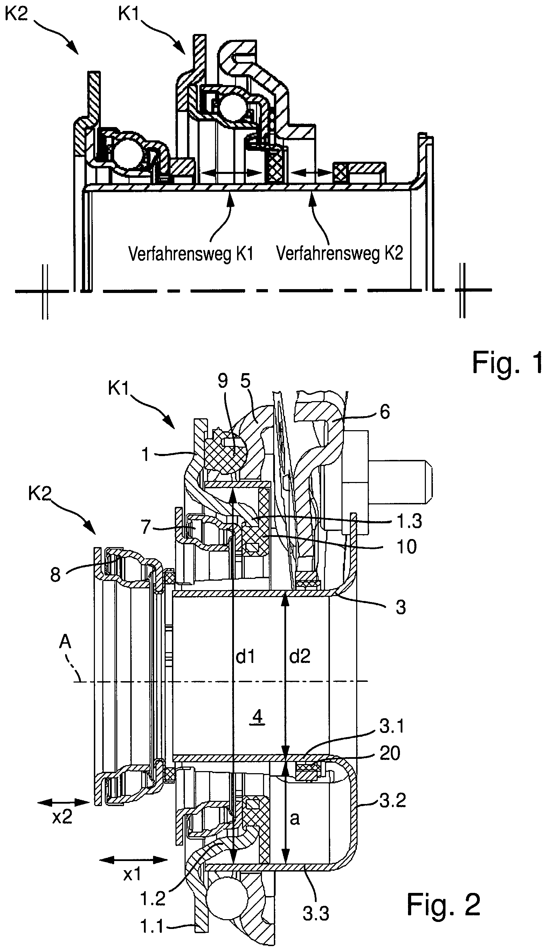

Problematisch wird es allerdings bei der Betätigungsvorrichtung nach dem Stand der Technik bei einer Hubänderung eines der Kolbensysteme. In Fig. 1 ist zum besseren Verständnis die Betätigungsvorrichtung des Standes der Technik in schematischer Darstellung mit den beiden Kolbensystemen K1 und K2 sowie deren Verfahrweg/Hub auf der gemeinsamen Führungshülse gezeigt. Das radial außen befindliche Kolbensystem K1 ist dabei der ersten Teilkupplung und das radial innen befindliche Kolbensystem K2 der zweiten Teilkupplung zugeordnet.

Für den axialen Bauraum dieser Betätigungsvorrichtung besteht folgende Anforderung:
Die minimale axiale Länge des radial innen angeordneten Kolbensystems K2 ergibt sich aus dem Hub K2 + Hub K1 + Wandstärken der benötigten Bauteile. Durch die gemeinsame Anordnung auf einer Führungshülse müssen die Kolbensysteme den benötigten Freigang für das jeweils andere Kolbensystem zur Verfügung stellen. Möchte man den Hub bei einem der beiden Kolbensysteme vergrößern, ergibt sich damit sofort eine Änderung der absoluten Position des anderen Kolbensystems, um den Freigang zu gewährleisten.

Benötigt beispielsweise das Kolbensystem K2 einen um 1 mm größeren Hub, bedeutet das eine Verschiebung des Kolbensystems K1 um 1 mm in Richtung der Kupplung. Dies wiederum hat zur Folge, dass das dem Kolbensystem K2 zugehörige Lager ebenfalls um 1 mm verschoben werden muss. Bei einer Änderung um 1 mm am Kolbensystem K2 bedeutet das eine Verschiebung des Kolbensystems K1 um 1 mm und des Lagers des Kolbensystems K2 um 2 mm in Richtung Kupplung. Somit erhöht sich bei einer Hubvergrößerung von einem der Kolbensysteme der axiale Bauraumbedarf der gesamten Betätigungsvorrichtung. Dabei kann sich der Bauraumbedarf bei einer Hubänderung sogar verdoppeln. Da sich auch Kupplungskennlinien in der Entwicklung verändern und ebenfalls Hubänderungen nach sich ziehen können, kann der Einsatz der bekannten Betätigungsvorrichtung auf Grund der beiden voneinander abhängigen Kolbensysteme insbesondere in axial begrenztem Bauraum zu Problemen führen.

Ein Einsatz zweier unabhängig voneinander zu betreibenden Kolbensysteme ist in der WO 2005/028902 offenbart. Dabei ist ein Kolbensystem radial innerhalb und das andere Kolbensystem radial außerhalb eines Führungsrohrs aufgenommen. Das an der Getriebegehäusewand befestigte Führungsrohr bildet hier mit seiner Außenhülle die Führungsfläche für das der ersten Teilkupplung zugeordnete Kolbensystem und mit seiner Innenwand die Führungsfläche für das der zweiten Teilkupplung zugeordnete Kolbensystem. Die von Aktoreinheiten axial verlagerbaren Kolben wirken dabei auf die Hebelsysteme der Kupplungen ein und werden selbst von Hebel beaufschlagt, die von Aktoreinheiten betätigt werden. Zur Betätigung des innerhalb des Führungsrohrs angeordneten Kolbens sind Längsschlitze in dem Führungsrohr vorgesehen, durch die der Hebel der zugehörigen Aktoreinheit greift.

Bei dieser bekannten Betätigungsvorrichtung sind die beiden Kolbensysteme auf unterschiedlichen Führungsflächen angeordnet, die sich allerdings beide auf einem gemeinsamen Abschnitt des Führungsrohres befinden. Die eine Führungsfläche wird durch eine erste, außen an dem Führungsrohr angeordnete, Hülse und die andere Führungsfläche durch eine zweite, innen an dem Führungsrohr angeordnete, Hülse gebildet. Neben dem Nachteil der Anordnung einer Führungsfläche innerhalb des Führungsrohres in unmittelbarer Nähe der Getriebeeingangswellen kann es auch hier auf Grund des geringen radialen Abstandes zwischen den Führungsteilen beider Kolbensysteme, insbesondere zwischen den das jeweilige Ausrücklager aufnehmenden Endbereichen, bei einer Hubänderung durchaus zu Problemen in Bezug auf eine gegenseitige Beeinflussung der Kolbensysteme kommen.

Daher besteht die Aufgabe der Erfindung darin, eine Betätigungsvorrichtung für eine Doppelkupplung zu schaffen, welche bei funktionssicherer Arbeitsweise sowie robuster und kostengünstiger Bauweise auch auf engstem axialen Bauraum eingesetzt werden kann. Insbesondere soll eine Anordnung der beiden Kolbensysteme vorgesehen werden, bei welcher eine Hubänderung in einem Kolbensystem keinen Einfluss auf das andere Kolbensystem hat.

Die Aufgabe wird durch die Merkmale des ersten Patentanspruchs gelöst. Vorteilhafte Ausgestaltungen ergeben sich aus den Unteransprüchen.

Bei einem Doppelkupplungsgetriebe mit einer Doppelkupplung und einer Betätigungsvorrichtung für die Doppelkupplung mit zwei über je ein Ein-/ Ausrücklager betätigbaren Teilkupplungen, wobei zur Beaufschlagung des auf die erste und zweite Teilkupplung einwirkenden ersten bzw. zweiten Ein-/ Ausrücklagers jeweils ein Kolbensystem vorgesehen ist, welches jeweils von einer ersten bzw. zweiten Aktoreinheit in axialer Richtung entlang einer um zumindest eine Getriebeeingangswelle angeordneten, am Doppelkupplungsgetriebe aufgenommenen, Führungshülse verlagerbar ist, weist die Führungshülse zumindest zwei radial beabstandete axiale Führungsflächen/Führungsdurchmesser auf, wobei jedem Führungsdurchmesser jeweils ein Kolbensystem zugeordnet ist. Die/der sich radial außen befindende Führungsfläche/Führungsdurchmesser ist durch die Innenwand eines Abschnitts der Führungshülse gebildet, der in einem Abstand zu einem sich radial innen befindenden rohrförmigen Abschnitt mit der/dem anderen Führungsfläche/ Führungsdurchmesser angeordnet ist. Erfindungsgemäß weist der die/den äußere(n) Führungsfläche/Führungsdurchmesser bildende Abschnitt der Führungshülse eine das Durchgreifen eines Aktorhebels der zweiten Aktoreinheit ermöglichende Öffnung auf. Weiterhin weist die Betätigungsvorrichtung des Doppelkupplungsgetriebes einen Lagerträger auf, der über das kupplungsseitige Ende des Abschnitts der Führungshülse radial nach innen greifend mit dem ersten Ein-/Ausrücklager in Wirkverbindung bringbar ist. Das erste Kolbensystem ist dabei auf der/dem sich radial außen befindenden Führungsfläche/Führungsdurchmesser und das zweite Kolbensystem auf der/dem sich radial innen befindenden Führungsfläche/Führungsdurchmesser der Führungshülse in axialer Richtung verlagerbar angeordnet.

Die Führungshülse ist über einen die beiden axialen Führungsflächen/ Führungsdurchmesser an ihrem getriebeseitigen Ende miteinander verbindenden radialen Boden an einer Getriebegehäusewand befestigt. Das erste Kolbensystem weist den an dem Ein-/Ausrücklager angreifenden Lagerträger auf, wobei der Lagerträger tellerförmig ausgebildet und über ein Führungsteil an der Führungshülse zentriert ist. Dabei ist das mit dem Lagerträger verbundene Führungsteil an der/dem äußeren Führungsfläche/ Führungsdurchmesser radial innen geführt und mittels eines an ihm angreifenden Aktorhebels der ersten Aktoreinheit beaufschlagbar.

Die das Durchgreifen des Aktorhebels der Aktoreinheit ermöglichende Öffnung reicht in etwa über den halben Umfang des Abschnitts.

Die Erfindung wird anhand eines Ausführungsbeispiels näher erläutert.

Es zeigen:
Figur 1 eine schematische Darstellung einer Betätigungsvorrichtung des Standes der Technik im Längsschnitt
Figur 2 einen Längsschnitt durch eine Betätigungsvorrichtung für eine Doppelkupplung eines Doppelkupplungsgetriebes
Figur 3 eine perspektivische Darstellung der Führungshülse der Betätigungsvorrichtung
Figur 4 und Figur 5 verschiedene perspektivische Darstellungen eines Lagerträgers der Betätigungsvorrichtung
Figur 6 eine perspektivische Darstellung der Betätigungsvorrichtung

Fig. 1 zeigt schematisch einen Längsschnitt einer Betätigungsvorrichtung des Standes der Technik, die weiter oben erläutert wurde.

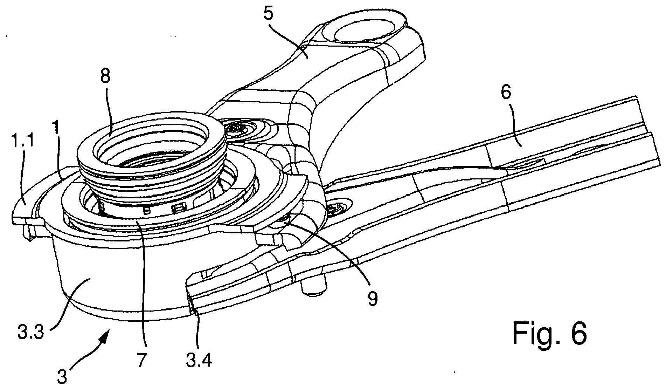

Fig. 2 zeigt einen Längsschnitt durch eine Betätigungsvorrichtung zur Betätigung einer Doppelkupplung eines Doppelkupplungsgetriebes. Die Doppelkupplung besteht aus zwei hier nicht dargestellten Teilkupplungen. Dabei ist der ersten Teilkupplung ein erstes Kolbensystem K1 und der zweiten Teilkupplung ein zweites Kolbensystem K2 zugeordnet. Die eine mechanische Kraftübertragung verwirklichenden Kolbensysteme K1, K2 sind auf einer konzentrisch um eine Längsachse A einer hier nicht gezeigten Getriebeeingangswelle angeordneten Führungshülse 3 zentriert und axial verlagerbar geführt. Die Führungshülse 3 weist eine Durchführung 4 für die sich aus einer Hohlwelle und einer innen liegenden Vollwelle zusammensetzende Getriebeeingangswelle auf. Die von je einer Aktoreinheit mit einem Aktorhebel 5 bzw. einem Aktorhebel 6 beaufschlagbaren Kolbensysteme K1, K2 dienen der Betätigung von koaxial angeordneten Lageranordnungen, die als Ein-/Ausrücklager 7, 8 für Hebelsysteme der beiden Teilkupplungen fungieren. Hierbei ist das die erste Teilkupplung betätigende Ein-/Ausrücklager 7 mit dem radial außen angeordneten Kolbensystem K1 und das die zweite Teilkupplung betätigende Ein-/Ausrücklager 8 mit dem radial innen angeordneten Kolbensystem K2 wirkverbunden. Die Führungshülse 3 weist einen rohrförmig ausgebildeten Abschnitt 3.1 auf, an dem am getriebeseitigen Ende ein radial umlaufender Flansch vorgesehen ist, der einen Boden 3.2 für die Führungshülse 3 bildet, die so eine topfförmige Ausbildung erhält. An den Boden 3.2 schließt sich radial außen ein weiterer axialer, von dem Getriebe weg gerichteter, Abschnitt 3.3 an, der den rohrförmigen Abschnitt 3.1 in einem Abstand a zumindest teilweise umgibt und eine Führungsfläche/einen Führungsdurchmesser d1 besitzt. Dabei bildet der radial innen angeordnete Abschnitt 3.1 der Führungshülse 3 eine Führungsfläche/einen Führungsdurchmesser d2, an dem das Kolbensystem K2 axial verlagerbar ist.
Das Kolbensystem K1 ist an dem radial außen befindlichen Führungsdurchmesser d1 des Abschnitts 3.3 der Führungshülse 3 entlang führbar. Dabei besteht das Kolbensystem K1 aus einem tellerförmigen Lagerträger 1, der über ein mit ihm verbundenes Führungsteil 10 an der Führungshülse 3 zentriert wird. Das Führungsteil 10 ist hierbei an der/dem äußeren Führungsfläche/ Führungsdurchmesser d1 radial innen verschiebbar angeordnet. Die/der sich radial außen befindende Führungsfläche/Führungsdurchmesser d1 wird somit durch die Innenwand des Abschnitts 3.3 der Führungshülse 3 gebildet. Der Lagerträger 1 greift kupplungsseitig an dem Ein-/Ausrücklager 7 an, während er getriebeseitig von einem Aktorhebel 5 einer hier nicht näher gezeigten Aktoreinheit über eine Lagerung 9 eine Krafteinleitung erfährt und in axialer Richtung verlagerbar ist. Auf der von dem inneren Führungsdurchmesser d2 gebildeten Führungsfläche ist ein zu dem Kolbensystem K2 gehörendes Führungselement 20 in axialer Richtung verschiebbar angeordnet. Das Führungselement 20 wirkt in an sich bekannter Weise auf das Ein-/Ausrücklager 8 für das Hebelsystem der zugehörigen Teilkupplung ein, während es getriebeseitig von dem Aktorhebel 6 (s. Fig. 6) beaufschlagbar ist. Die axiale Abmessung des inneren rohrförmigen Abschnitts 3.1 der Führungshülse 3 ist hierbei etwas größer als die axiale Abmessung des äußeren Abschnitts 3.3. Der tellerförmig ausgebildete Lagerträger 1 weist radial außen einen umlaufenden Rand mit Laschen 1.1 auf, an den sich ein in Richtung Getriebeseite gebogener Abschnitt 1.2 anschließt. Dabei übergreift der Lagerträger 1 das freie, kupplungsseitige Ende des äußeren Abschnitts 3.3 der Führungshülse 3 und tritt über einen radial gerichteten und mit dem Führungsteil 10 verbundenen Abschnitt 1.3 mit dem Ein-/Ausrücklager 7 in Wirkverbindung. Das die Führung des Kolbensystems K1 übernehmende Führungsteil 10 besteht vorzugsweise aus Kunststoff und weist verbesserte Reibeigenschaften auf. Es kann an den Lagerträger 1 beispielsweise geklipst oder angespritzt sein. Eine axiale Arretierung (nicht näher gezeigt) zur Verlustsicherung im Betrieb ist ebenfalls vorgesehen. Die Führung des Kolbensystems K1 kann je nach Anforderung sowohl umlaufend als auch nur punktuell stattfinden. Ebenso können in die Führungshülse 3 Sicken für die Schleppmomentabstützung eingebracht sein. Mittels Doppelpfeilen sind hier die Verfahrwege x1, x2 der Kolbensysteme K1, K2 dargestellt. Dabei weist das radial außen angeordnete Kolbensystem K1 einen Verfahrweg x1 und das radial innen angeordnete Kolbensystem K2 einen Verfahrweg x2 auf. Die Ein-/Ausrücklager 7, 8 können so unabhängig voneinander verfahren werden.

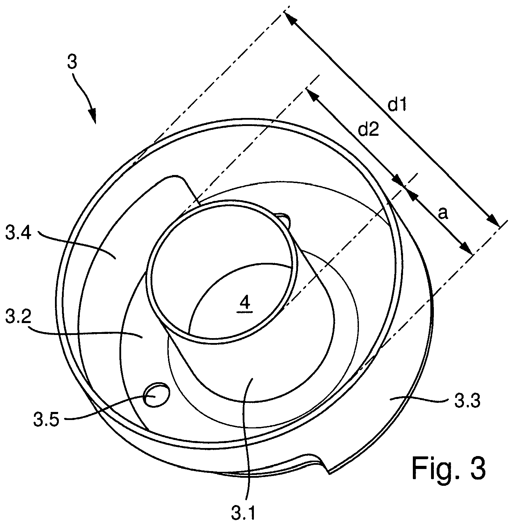

In Fig. 3 ist die topfförmige oder im Querschnitt gesehen U-förmige Ausbildung der Führungshülse 3 gut zu erkennen. Der radial innen liegende rohrförmige Abschnitt 3.1 mit dem Führungsdurchmesser d2 und der Durchführung 4 für die Getriebeeingangswelle weist eine durchgehende Führungsfläche auf. Der radial außen in einem Abstand a zu dem inneren Abschnitt 3.1 angeordnete Abschnitt 3.3 mit dem Führungsdurchmesser d1 hingegen besitzt in seiner Führungsfläche eine größere Öffnung 3.4, die für den Durchgriff des Aktorhebels 6 der Aktoreinheit vorgesehen ist (s. Fig. 6). Vorzugsweise reicht die Öffnung 3.4 in etwa über den halben Umfang des äußeren Abschnitts 3.3, wobei die Öffnung 3.4 in axialer Richtung getriebeseitig unmittelbar am Boden 3.2 ansetzt, während das kupplungsseitige Ende des Abschnitts 3.3 über den vollen Umfang von 360° reicht. Dabei muss die Öffnung 3.4 so bemessen sein, dass genug Platz für den Aktorhebel 6 vorhanden ist, der bis zu dem am inneren Führungsdurchmesser d2 angeordneten Führungselement 20 hindurch greift.
In dem radialen Boden 3.2 sind außerdem Bohrungen 3.5 für die Befestigung der Führungshülse 3 an einer nicht dargestellten Getriebegehäusewand vorgesehen. Der zwischen dem äußeren Führungsdurchmesser d1 und dem inneren Führungsdurchmesser d2 vorhandene Abstand a muss zudem so groß sein, dass mit einem Montagewerkzeug ohne Behinderung gearbeitet und beispielsweise die Befestigung an der Getriebegehäusewand durchgeführt werden kann.

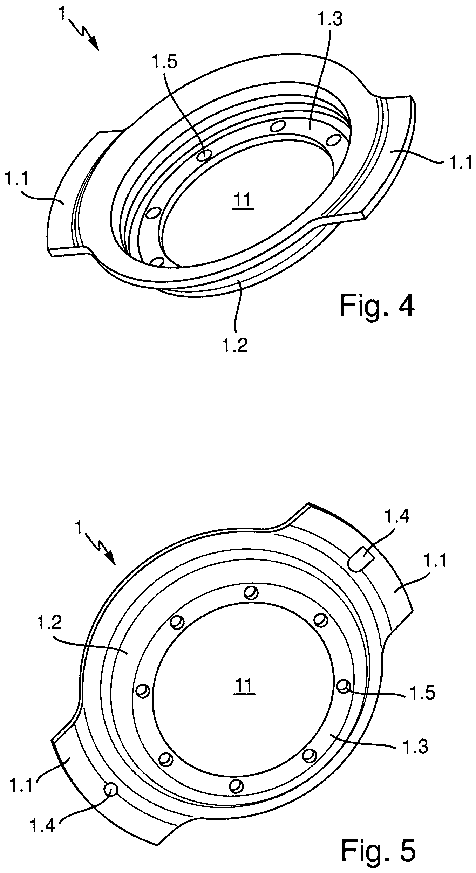

Die Fig. 4 zeigt den Lagerträger 1 des Kolbensystems K1 in einer räumlichen Darstellung, wobei hier die dem Ein-/Ausrücklager 7 zugewandte Oberseite näher gezeigt ist.
In Fig. 5 ist eine räumliche Darstellung insbesondere mit Sicht auf die Unterseite des Lagerträgers 1 zu sehen, an welcher der Aktorhebel 5 über die Lagerung 9 angreift. Zu diesem Zweck weist der Lagerträger 1 an den äußeren Laschen 1.1 jeweils eine Einbuchtung 1.4 für die Krafteinleitung durch den Aktorhebel 5 auf. In dem radialen Abschnitt 1.3, der eine zentrale Durchführung 11 für die Aufnahme der Führungshülse 3 aufweist, sind kleine Öffnungen 1.5 für die Befestigung des Führungsteils 10 an dem Lagerträger 1 vorgesehen, die vorzugsweise für den Kunststoffdurchgang bei einer umspritzten Variante der Verbindung des aus Kunststoff bestehenden Führungsteils 10 mit dem Lagerträger 1 dienen.

Die Fig. 6 zeigt schließlich eine perspektivische Darstellung der Betätigungsvorrichtung. Es ist hierbei die von dem Führungsdurchmesser d1 gebildete, äußere Führungsfläche der Führungshülse 3 zu sehen, deren hier nicht zu sehende Innenwand der Führung des mit dem Lagerträger 1 verbundenen Führungsteils 10 dient. Dabei erfolgt die Krafteinleitung durch den Aktorhebel 5 über die Lagerung 9 an den Einbuchtungen 1.4 der äußeren Laschen 1.1 des Lagerträgers 1. Der Lagerträger 1 wiederum greift unter das Ein-/Ausrücklager 7, um dieses axial in Richtung der ersten Teilkupplung zu verlagern. Auf der hier nicht gezeigten, von dem Führungsdurchmesser d2 gebildeten, inneren Führungsfläche ist das mit dem Ein-/Ausrücklager 8 in Wirkverbindung stehende Führungselement 20 (hier ebenfalls nicht gezeigt) axial verlagerbar angeordnet. Der Aktorhebel 6 greift dabei durch die in der/dem äußeren Führungsfläche/Führungsdurchmesser d1 der Führungshülse 3 vorhandenen Öffnung 3.4 und beaufschlagt über das Führungselement 20 das Ein-/Ausrücklager 8. Wie insbesondere aus der Fig. 2 zu erkennen ist, liegen durch den Aufbau der Betätigungsvorrichtung (speziell der Führungshülse 3) die Verfahrwege x1, x2 der beiden Kolbensysteme K1, K2 nicht auf demselben Führungsdurchmesser, sondern weisen separate Führungsflächen mit unterschiedlichen Führungsdurchmessern d1, d2 auf. Dadurch sind beide Systeme unabhängig voneinander. Bei einer Hubänderung in einem Kolbensystem muss nicht zwangsläufig eine Änderung der absoluten Position des anderen Kolbensystems erfolgen. Es ist ein freies Verfahren der Ein-/Ausrücklager 7, 8 zueinander möglich. Das bedeutet, dass beispielsweise bei einer Huberhöhung des Kolbensystems K1 keine Verschiebung des Ein-/Ausrücklagers 8 des zweiten Kolbensystems K2 notwendig ist. Es ist sogar denkbar, dass das radial außen angeordnete Kolbensystem K1 in axialer Richtung über die Startposition des radial innen angeordneten Kolbensystems K2 fahren kann. Das ist beispielsweise durch eine entsprechende Wahl der Hebelfederzungen sowie der Lagerdurchmesser erzielbar. Die Betätigungsvorrichtung ermöglicht somit eine Doppelkupplungsbetätigung in axial sehr kurzen Bauräumen. Es wird eine Entkopplung der beiden Kolbensysteme K1 und K2 erreicht sowie eine robuste und kostengünstige Architektur verwirklicht.

### Bezugszeichenliste

- 1: Lagerträger
- 1.1: Lasche
- 1.2: Abschnitt
- 1.3: Abschnitt
- 1.4: Einbuchtung
- 1.5: Öffnung
- 3: Führungshülse
- 3.1: Abschnitt
- 3.2: Boden
- 3.3: Abschnitt
- 3.4: Öffnung
- 3.5: Bohrung
- 4: Durchführung
- 5: Aktorhebel
- 6: Aktorhebel
- 7: Ein-/Ausrücklager
- 8: Ein-/Ausrücklager
- 9: Lagerung
- 10: Führungsteil
- 11: Durchführung
- 20: Führungselement
- A: Längsachse
- d1: Führungsdurchmesser/Führungsfläche
- d2: Führungsdurchmesser/Führungsfläche
- K1: Kolbensystem
- K2: Kolbensystem
- x1: Verfahrweg
- x2: Verfahrweg

## Patentansprüche

1. Doppelkupplungsgetriebe mit einer Doppelkupplung und einer Betätigungsvorrichtung für die Doppelkupplung, mit zwei über je ein Ein-/Ausrücklager (7, 8) betätigbaren Teilkupplungen, wobei zur Beaufschlagung des auf die erste und zweite Teilkupplung einwirkenden ersten bzw. zweiten Ein-/Ausrücklagers (7, 8) jeweils ein Kolbensystem (K1, K2) vorgesehen ist, welches jeweils von einer ersten bzw. zweiten Aktoreinheit in axialer Richtung entlang einer um zumindest eine Getriebeeingangswelle angeordneten, am Doppelkupplungsgetriebe aufgenommenen, Führungshülse (3) verlagerbar ist, wobei die Führungshülse (3) zumindest zwei radial beabstandete axiale Führungsflächen/Führungsdurchmesser (d1, d2) aufweist, wobei jedem Führungsdurchmesser (d1, d2) jeweils ein Kolbensystem (K1, K2) zugeordnet ist, wobei die/der sich radial außen befindende Führungsfläche/Führungsdurchmesser (d1) durch die Innenwand eines Abschnitts (3.3) der Führungshülse (3) gebildet ist, der in einem Abstand (a) zu einem sich radial innen befindenden rohrförmigen Abschnitt (3.1) mit der/dem Führungsfläche/ Führungsdurchmesser (d2) angeordnet ist, **dadurch gekennzeichnet, dass** der die/den äußere(n) Führungsfläche/Führungsdurchmesser (d1) bildende Abschnitt (3.3) der Führungshülse (3) eine das Durchgreifen eines Aktorhebels (6) der zweiten Aktoreinheit ermöglichende Öffnung (3.4) aufweist und ein Lagerträger (1) über das kupplungsseitige Ende des Abschnitts (3.3) der Führungshülse (3) radial nach innen greifend mit dem ersten Ein-/Ausrücklager (7) in Wirkverbindung bringbar ist.

2. Doppelkupplungsgetriebe nach Anspruch 1, **dadurch gekennzeichnet, dass** das erste Kolbensystem (K1) auf der/dem sich radial außen befindenden Führungsfläche/Führungsdurchmesser (d1) und das zweite Kolbensystem (K2) auf der/dem sich radial innen befindenden Führungsfläche/Führungsdurchmesser (d2) der Führungshülse (3) in axialer Richtung verlagerbar angeordnet ist.

3. Doppelkupplungsgetriebe nach Anspruch 1 oder 2, **dadurch gekennzeichnet, dass** die Führungshülse (3) über einen die beiden axialen Führungsflächen/ Führungsdurchmesser (d1, d2) an ihrem getriebeseitigen Ende miteinander verbindenden radialen Boden (3.2) an einer Getriebegehäusewand befestigt ist.

4. Doppelkupplungsgetriebe nach einem der Ansprüche 1 bis 3, **dadurch gekennzeichnet, dass** das erste Kolbensystem (K1) den an dem Ein-/Ausrücklager (7) angreifenden Lagerträger (1) aufweist, wobei der Lagerträger (1) tellerförmig ausgebildet und über ein Führungsteil (10) an der Führungshülse (3) zentriert ist.

5. Doppelkupplungsgetriebe nach Anspruch 4, **dadurch gekennzeichnet, dass** das mit dem Lagerträger (1) verbundene Führungsteil (10) an der/dem äußeren Führungsfläche/ Führungsdurchmesser (d1) radial innen geführt ist.

6. Doppelkupplungsgetriebe nach Anspruch 4 oder 5, **dadurch gekennzeichnet, dass** der Lagerträger (1) mittels eines an ihm angreifenden Aktorhebels (5) der ersten Aktoreinheit beaufschlagbar ist.

7. Doppelkupplungsgetriebe nach einem der vorangehenden Ansprüche, **dadurch gekennzeichnet, dass** die Öffnung (3.4) in etwa über den halben Umfang des Abschnitts (3.3) reicht.

## Claims

1. Double clutch transmission having a double clutch and an actuating apparatus for the double clutch, having two component clutches which can be actuated via in each case one engagement/release bearing (7, 8), in each case one piston system (K1, K2) being provided for loading the first and second engagement/release bearing (7, 8) which act on the first and second component clutch, which piston system (K1, K2) can be moved in each case by a first and second actuator unit in the axial direction along a guide sleeve (3) which is arranged around at least one transmission input shaft and is received on the double clutch transmission, the guide sleeve (3) having at least two axial guide faces/guide diameters (d1, d2) which are spaced apart radially, each guide diameter (d1, d2) being assigned in each case one piston system (K1, K2), the guide face/guide diameter (d1) which is situated radially on the outside being formed by way of the inner wall of a section (3.3) of the guide sleeve (3), which section (3.3) is arranged at a spacing (a) from a tubular section (3.1) which is situated radially on the inside with the guide face/guide diameter (d2), **characterized in that** that section (3.3) of the guide sleeve (3) which forms the outer guide face/guide diameter (d1) has an opening (3.4) which makes it possible for an actuator lever (6) of the actuator unit to reach through, and a bearing carrier (1) can be brought into an operative connection with the first engagement/release bearing (7) via the coupling-side end of the section (3.3) of the guide sleeve (3) in a manner which reaches radially inwards.

2. Double clutch transmission according to Claim 1, **characterized in that** the first piston system (K1) is arranged such that it can be moved in the axial direction on that guide face/guide diameter (d1) of the guide sleeve (3) which is situated radially on the outside, and the second piston system (K2) is arranged such that it can be moved in the axial direction on that guide face/guide diameter (d2) of the guide sleeve (3) which is situated radially on the inside.

3. Double clutch transmission according to Claim 1 or 2, **characterized in that** the guide sleeve (3) is fastened to a transmission housing wall via a radial bottom (3.2) which connects the two axial guide faces/guide diameters (d1, d2) to one another at their transmission-side end.

4. Double clutch transmission according to one of Claims 1 to 3, **characterized in that** the first piston system (K1) has the bearing carrier (1) which acts on the engagement/release bearing (7), the bearing carrier (1) being of plate-shaped configuration and being centred on the guide sleeve (3) via a guide part (10).

5. Double clutch transmission according to Claim 4, **characterized in that** the guide part (10) which is connected to the bearing carrier (1) is guided radially on the inside on the outer guide face/guide diameter (d1).

6. Double clutch transmission according to Claim 4 or 5, **characterized in that** the bearing carrier (1) can be loaded by means of an actuator lever (5) of the first actuator unit, which actuator lever (5) acts on it.

7. Double clutch transmission according to one of the preceding claims, **characterized in that** the opening (3.4) reaches approximately over half the circumference of the section (3.3).

## Revendications

1. Boîte de vitesses à double embrayage avec un double embrayage et un dispositif d'actionnement pour le double embrayage, avec deux embrayages partiels actionnables chacun par une butée d'embrayage/débrayage (7, 8), dans laquelle il est respectivement prévu pour attaquer la première ou la deuxième butée d'embrayage-/débrayage (7, 8) agissant sur le premier et le deuxième embrayages partiels, un système de piston (K1, K2), qui est déplaçable respectivement par une première ou une deuxième unité d'actionneur en direction axiale le long d'un manchon de guidage (3) disposé autour d'au moins un arbre d'entrée de boîte de vitesses et logé sur la boîte de vitesse à double embrayage, dans laquelle le manchon de guidage (3) présente au moins deux faces de guidage axiales/diamètres de guidage axiaux (d1, d2) radialement espacé(e)s, dans laquelle un système de piston (K1, K2) est associé respectivement à chaque diamètre de guidage (d1, d2), dans laquelle la face de guidage/le diamètre de guidage se trouvant radialement à l'extérieur (d1) est formé(e) par la paroi intérieure d'une partie (3.3) du manchon de guidage (3), qui est disposée à une distance (a) d'une partie tubulaire se trouvant radialement à l'intérieur (3.1) avec la face de guidage/le diamètre de guidage (d2), **caractérisée en ce que** la partie (3.3) du manchon de guidage (3) formant la face de guidage/le diamètre de guidage extérieur(e) (d1) présente une ouverture (3.4) permettant le passage d'un levier d'actionneur (6) de la deuxième unité d'actionneur et un support de palier (1) peut être mis en liaison active avec la première butée d'embrayage/débrayage (7) par l'extrémité côté embrayage de la partie (3.3) du manchon de guidage (3) en agrippant radialement vers l'intérieur.

2. Boîte de vitesses à double embrayage selon la revendication 1, **caractérisée en ce que** le premier système de piston (K1) est disposé de façon déplaçable en direction axiale sur la face de guidage/le diamètre de guidage se trouvant radialement à l'extérieur (d1) et le deuxième système de piston (K2) est disposé de façon déplaçable en direction axiale sur la face de guidage/le diamètre de guidage se trouvant radialement à l'intérieur (d2) du manchon de guidage (3).

3. Boîte de vitesses à double embrayage selon la revendication 1 ou 2, **caractérisée en ce que** le manchon de guidage (3) est fixé à une paroi du carter de boîte de vitesses par un fond radial (3.2) reliant l'un(e) à l'autre les deux faces de guidage axiales/diamètres de guidage axiaux (d1, d2) par leur extrémité côté boîte de vitesse.

4. Boîte de vitesses à double embrayage selon l'une quelconque des revendications 1 à 3, **caractérisée en ce que** le premier système de piston (K1) présente le support de palier (1) agissant sur la butée d'embrayage/débrayage (7), dans laquelle le support de palier (1) est réaliste en forme de plateau et est centré sur le manchon de guidage (3) par une pièce de guidage (10).

5. Boîte de vitesses à double embrayage selon la revendication 4, **caractérisée en ce que** la pièce de guidage (10) reliée au support de palier (1) est guidée radialement à l'intérieur sur la face de guidage/le diamètre de guidage extérieur(e) (d1).

6. Boîte de vitesses à double embrayage selon la revendication 4 ou 5, **caractérisée en ce que** le support de palier (1) peut être actionné au moyen d'un levier d'actionneur (5) de la première unité d'actionneur qui agit sur lui.

7. Boîte de vitesses à double embrayage selon l'une quelconque des revendications précédentes, **caractérisée en ce que** l'ouverture (3.4) s'étend environ sur la moitié du pourtour de la partie (3.3).
